# EUROPÄISCHE PATENTANMELDUNG

(11) **EP 1 577 168 A2**
(43) Veröffentlichungstag der Anmeldung: **21.09.2005**
(21) Anmeldenummer: 05005319.8
(22) Anmeldetag: 11.03.2005
(51) Int. Cl.: B60R 19/22, B60R 19/18

(54) **Energieabsorbierendes Bauteil**

(30) Priorität: 17.03.2004 DE 102004013370
(71) Anmelder: Kautex Textron GmbH & Co. KG., 53229 Bonn (DE)
(72) Erfinder: Mahmud Al-Haj, Mustafa, Dr., 53332 Bornheim (DE); Grützner, Roland, 45145 Essen (DE)
(74) Vertreter: Lippert, Stachow & Partner

(57) **Zusammenfassung**

Die Erfindung betrifft ein energieabsorbierendes Bauteil für Kfz, insbesondere als Stoßfänger (1), der als blasgeformter Hohlkörper aus thermoplastischem Kunststoff hergestellt wurde und der eine Schaumstofffüllung allseitig umschließt. Der Hohlkörper ist als Mehrkammer-Hohlkörper ausgebildet. Dieser umfasst mehrere jeweils in sich abgeschlossene Kammern (4a, b, c, d), die jeweils Schaumstofffüllungen mit unterschiedlichem Energieabsorptionsvermögen aufnehmen (Figur 1).

## Beschreibung

Die Erfindung betrifft ein energieabsorbierendes Bauteil für Kfz, insbesondere einen Stoßfänger, als blasgeformter Hohlkörper aus thermoplastischem Kunststoff, der eine Schaumstofffüllung allseitig umschließt.

Energieabsorbierende Strukturen der oben beschriebenen Art, insbesondere Kraftfahrzeugstoßfänger dienen zur Aufnahme von Stoßenergie, wobei die Stoßenergie durch Verrichtung von Verformungsarbeit abgebaut wird. Dabei geht es einerseits darum, die bei einem Aufprall des Fahrzeugs entstehende Stoßenergie so abzubauen bzw. abzuleiten, dass keine dauerhaften Verformungen an dem Kfz entstehen, andererseits sollte ein Stoßfänger auch hinreichenden Fußgängerschutz gewährleisten, d. h. bei einem Zusammenstoß mit Fußgängern eine geringe Energieaufnahme bei einem großen Deformationsweg gewährleisten.

Im Falle eines Zusammenpralls des Kfz mit einem härteren Hindernis bei etwas höherer Geschwindigkeit muss sicher gestellt werden, dass je nach Aufprallenergie diese über die elastische Verformung von anderen Komponenten des Kfz abgebaut wird, beispielsweise über die Verformung von Biegequerträgern, Crash-Boxen oder Pralldämpfern. Hieraus ergibt sich die Notwendigkeit, Strukturen vorzusehen, die ein unterschiedliches Energieabsorptionsvermögen in Fahrtrichtung des Fahrzeugs gesehen aufweisen. Darüber hinaus ist es aber auch wünschenswert, verschiedene Aufprallzonen mit unterschiedlichem Energieabsorptionsvermögen parallel zur Fahrtrichtung vorzusehen, da im Falle eines Aufpralls mit einem Fußgänger die Position des ersten Aufpralls die weitere Bewegung des Körpers des Fußgängers bestimmt. Hierzu ist beispielsweise in der EP 1 046 546 beschrieben, dass es günstig ist, wenn die Stelle des ersten Aufpralls bei einem Fußgängerunfall möglichst tief liegt, um das Risiko von Knieverletzungen zu verhindern. Um dies ohne zusätzliche Installationen an dem Stoßfänger zu gewährleisten, wird in der EP 1 046 546 ein Stoßfänger beschrieben, dessen im montierten Zustand unterer Bereich eine höhere Festigkeit aufweist, als der obere Bereich, in dem dann eine vergleichsweise geringere Energieaufnahme bei größerem Deformationsweg stattfindet.

Der in der EP 1 046 546 beschriebene Stoßfänger besteht aus einer schalenförmigen Abdeckung mit einer im montierten Zustand der Fahrgastzelle zugewandten Öffnung, die mit einem Kunststoffschaum ausgefüllt ist, wobei über den Querschnitt der Anordnung Schäume mit verschiedener Festigkeit in die Abdeckung eingebracht sind. Optional ist vorgesehen, eine die Abdeckung versteifende Struktur innerhalb dieser anzubringen.

Die in der EP 1 046 546 A1 beschriebene Anordnung ist allerdings mit dem Nachteil behaftet, dass der nicht allseits mit der Abdeckung umschlossene Schaumstoffkörper keine hinreichende Stabilität gegen stärkere Stoßeinwirkung aufweist; eine Verstärkungsstruktur innerhalb der Abdeckung ist erforderlich, um größere Stoßenergie auf die dem Stoßfänger nachgeschalteten verformbaren Bauteile der Karosserie abzuleiten. Schließlich kann nicht ausgeschlossen werden, dass der Stoßfänger nach einem leichten Aufprall gegen ein festes Hindernis, beispielsweise bei einem Parkrempler, bleibenden Schaden nimmt, so dass ein vollständiger Austausch des Stoßfängers nach einer solchen Karambolage erforderlich wäre. Dies ist auch darauf zurückzuführen, dass die Schaumstruktur im Inneren des Stoßfängers nicht allseitig umschlossen und gehalten wird.

In der DE 32 09 464 ist bereits ein energieabsorbierendes Bauteil in Form eines Stoßfängers beschrieben, das bei geringem Gewicht an dessen sichtbarer Oberfläche gegen Stöße im Wesentlichen unempfindlich sein soll. Hierzu wird vorgeschlagen, einen blasgeformten Träger an seiner Außenseite mit einer Abdeckung aus Polyurethanschaum zu versehen. Hierdurch wird zwar ein unterschiedliches Energieabsorptionsvermögen in Fahrtrichtung erzielt, verschiedene Aufprallzonen quer zur Fahrtrichtung sind allerdings schwerlich erzielbar. Darüber hinaus ist die Herstellung eines solchen Stoßfängers relativ aufwendig, da der blasgeformte Träger in ein Formwerkzeug eingelegt werden muss, innerhalb dessen der verbleibende Raum ausgeschäumt wird. Hierzu muss der Träger vorher mit einem Haftvermittler behandelt werden.

Aus der EP 0 947 727 A1 ist ein Stoßfängersystem bekannt, bei dem die Schaumstruktur aus drei parallel zur Krafteinleitungsrichtung angeordneten Schaumstoffschichten mit unterschiedlichem Energieabsorptionsvermögen besteht. Hierzu wird vorgeschlagen, an dem Längsträger des Kfz einen Querträger anzuordnen, an den die Schaumstruktur angebracht wird. Die unterschiedlichen Schaumstoffschichten werden miteinander verklebt; außen auf die Schaumstruktur wird eine Verkleidung angebracht. Auch diese Anordnung ist sowohl im Aufbau als auch in der Herstellungsweise verhältnismäßig kompliziert.

Der Erfindung liegt daher die Aufgabe zugrunde, ein energieabsorbierendes Bauteil der eingangs genannten Art hinsichtlich der Möglichkeit, verschiedene Aufprallzonen mit unterschiedlichem Energieabsorptionsvermögen vorzusehen, zu verbessern. Insbesondere soll ein energieabsorbierendes Bauteil geschaffen werden, das leicht herstellbar ist und unterschiedliche Anforderungen an den Personenschutz einerseits und an den Schutz des Kfz gegen dauerhafte aufprallbedingte Verformungen andererseits erfüllen kann.

Die Aufgabe wird gelöst durch ein energieabsorbierendes Bauteil für Kraftfahrzeuge, insbesondere Stoßfänger, als blasgeformter Hohlkörper aus thermoplastischem Kunststoff, der eine Schaumstofffüllung allseitig umschließt, wobei sich das energieabsorbierende Bauteil dadurch auszeichnet, dass der Hohlkörper mehrere jeweils abgeschlossene Kammern aufweist, die jeweils Schaumstofffüllungen mit unterschiedlichem Energieabsorptionsvermögen aufnehmen.

Das Bauteil gemäß der Erfindung ist als integrales Bauteil vorgesehen, welches sich in einem komplexen Verfahrensgang herstellen lässt. Aufgrund der Tatsache, dass die Kammern dieses Bauteils jeweils abgeschlossen und vollständig mit Schaum verfüllt sind, ergibt sich eine stabile und tragende Struktur, die sowohl die Anforderung an eine hohe Formbeständigkeit als auch die Anforderung an eine partiell geringe Energieaufnahme bei einem großen Deformationsweg erfüllt. Eine Rissbildung innerhalb des Schaumstoffverbundes ist für die Stabilität des Bauteils insgesamt nicht nachteilhaft, ein Ausbröckeln des Schaumstoffs wie bei offenen Strukturen ist nicht möglich.

Bei einer bevorzugten Variante des Bauteils gemäß der Erfindung ist vorgesehen, dass wenigstens eine Kammer einen sich über die gesamte Länge des Bauteils erstreckenden formsteifen Träger bildet.

Dieser den Träger bildenden Kammer können mehrere sich in Längsrichtung des Bauteils erstreckende Kammern vorgelagert sein, die verschiedene Aufprallzonen mit jeweils verschiedenem Energieabsorptionsvermögen bilden.

Es ist zweckmäßig, wenn die dem Träger als Aufprallzonen vorgelagerten Kammern in Einbaulage von oben nach unten eine zunehmende Festigkeit aufweisen.

Bei einem leichten Aufprall mit einem Fußgänger beispielsweise erfolgt die Energieaufnahme größtenteils über die zuvor beschriebenen Aufprallzonen, bei einem stärkeren Zusammenstoß mit einem anderen Fahrzeug beispielsweise würde ein Großteil der Energie über den verhältnismäßig formsteifen Träger auf die dahinterliegenden Strukturen des Kfz übertragen werden. Schließlich können an dem formsteifen Träger auch Befestigungsmittel zur Befestigung an einem Fahrzeugquerträger oder an einer Längsträgerstruktur vorgesehen sein.

Zweckmäßigerweise sind zumindest einige der Kammern jeweils mit Schaumstoffen unterschiedlicher Dichte befüllt.

Bei einer bevorzugten Variante des energieabsorbierenden Bauteils gemäß der Erfindung sind als Schaumstoffe Partikelschäume, vorzugsweise in Form von Minibeads vorgesehen. Solche Minibeads können verhältnismäßig einfach während der Herstellung des Hohlkörpers als Blasformteil in diesen eingebracht worden sein. Dabei kann so vorgegangen werden, dass komprimierte Kunststoff-Beads in den noch innerhalb der Blasform befindlichen aufgeweiteten Hohlkörper unter einem Druck, der größer ist als der im Hohlkörper herrschende Druck, in diesen eingeführt werden. Dabei wird eine vollständige Ausfüllung des Hohlkörpers mit dem Kunststoffschaum erzielt. Die einzelnen Partikel des Kunststoffschaums können beispielsweise mittels Heißdampf miteinander verschweißt werden, die Stabilität des Schaumkörpers kann allerdings auch lediglich über die Packungsdichte innerhalb der betreffenden Kammern erzielt werden. Es kann sich je nach Herstellungsverfahren bzw. Prozessführung ergeben, dass zumindest ein Teil des Partikelschaums bei Einbringung in die aufgeweiteten Hohlkörper mit der Innenwandung desselben verklebt bzw. verschweißt, da in diesem Stadium des Prozesses eine vollständige Auskühlung des Hohlkörpers noch nicht erfolgt ist.

Es ist ebenfalls vorteilhaft, wenn unterschiedliche Bereiche des Hohlkörpers unterschiedliche Wandstärken aufweisen. Die Wahl der Wandstärke der verschiedenen Bereiche des Hohlkörpers kann entsprechend den gewünschten Deformationseigenschaften gewählt werden.

Dabei kann vorgesehen sein, dass die dem Träger vorgelagerten, als Aufprallzonen vorgesehenen Kammern eine geringere Wandstärke aufweisen als die den Träger bildende Kammer.

Aus Gründen der Rezyklierbarkeit des Bauteils ist es besonders vorteilhaft, wenn der Hohlkörper und dessen Füllung aus einem gleichartigen Kunststoff bestehen.

Als Schaumstoffe kommen beispielsweise Partikelschäume mit einer Dichte von 30-200 kg/m³ in Betracht. Bei einer bevorzugten Variante des erfindungsgemäßen Bauteils ist als Schaumstoff ein Polypropylen-Partikelschaum (EPP) vorgesehen. Alternativ kommen selbstverständlich auch EPS (Polystyren) oder PUR (Polyurethan) Schäume in Betracht.

Es ist für den Fachmann selbstverständlich, dass die Anzahl und Anordnung der verschiedenen Kammern des erfindungsgemäßen Bauteils für den Fachmann in weiten Grenzen variierbar ist.

Die Erfindung wird nachstehend anhand eines in den Zeichnungen dargestellten Ausführungsbeispiels erläutert.

Es zeigen:
- Fig. 1: eine Ansicht des energieabsorbierenden Bauteils gemäß der Erfindung als Stoßfänger,
- Fig. 2: einen Querschnitt durch den in Figur 1 dargestellten Stoßfänger und
- Fig. 3: eine schematische Ansicht des Verfahrensprinzips zur Herstellung des erfindungsgemäßen Bauteils.

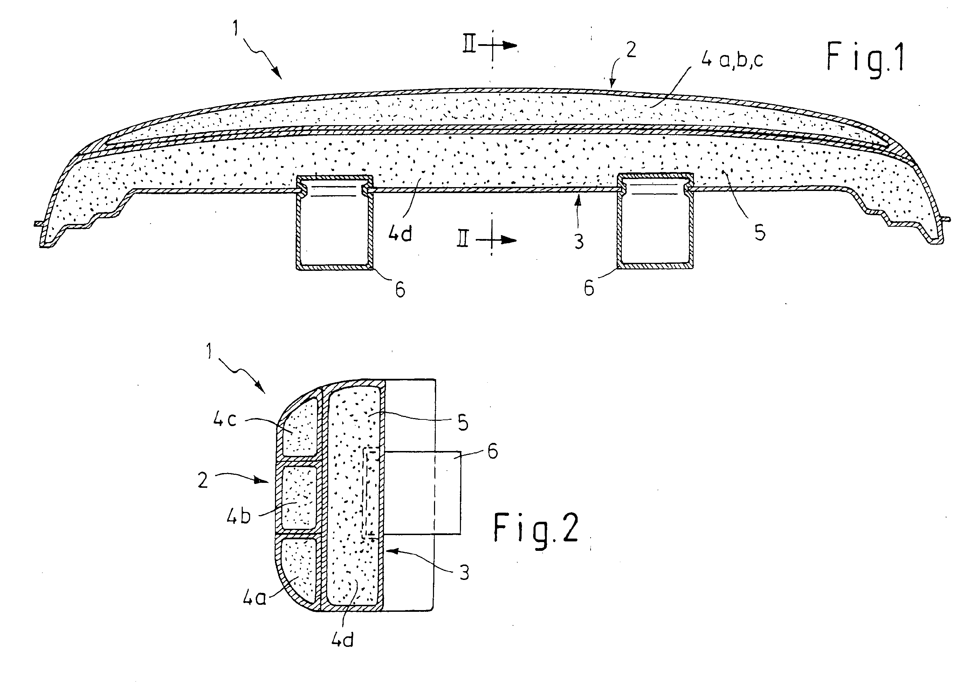

Der Stoßfänger 1 gemäß der Erfindung ist als integrales extrusionsblasgeformtes Kunststoffbauteil ausgebildet, welches im Wesentlichen in einem Verfahrensgang erhalten wurde. Wie dies dem in Figur 2 dargestellten Schnitt durch den Stoßfänger 1 zu entnehmen ist, ist dieser als Mehrkammer-Hohlkörper ausgebildet.

Der Einfachheit halber wird im Folgenden die im montierten Zustand des Stoßfängers 1 an dem Kfz in Fahrtrichtung weisende Seite als Vorderseite 2 bezeichnet, hingegen die der Fahrgastzelle bzw. dem Motorraum zugewandte Seite des Stoßfängers 1 als Rückseite 3.

Wie dies dem Querschnitt in Figur 2. zu entnehmen ist, besitzt der Stoßfänger 1 gemäß Ausführungsbeispiel insgesamt vier Kammern 4a, 4b, 4c und 4d, wobei die Kammer 4a, b, c die Vorderseite 2 des Stoßfängers bilden und übereinander angeordnet sind, die Kammer 4d hingegen in Fahrtrichtung hinter den Kammern 4a, b und c angeordnet ist. Die Kammer 4d erstreckt sich über die gesamte Länge des Stoßfängers und ist in dem beschriebenen Ausführungsbeispiel nicht mehr segmentiert, was jedoch ohne weiteres quer zur Fahrtrichtung möglich wäre. Die Kammer 4d des Hohlkörpers bildet einen verhältnismäßig biege- und formsteifen Träger 5, der Befestigungselemente 6 zur Montage an einem Querträger des Kfz aufweist. Die Befestigungselemente 6 können einstückig an den Träger 5 angeformt sein, diese können allerdings auch als Einlegeteile aus Metall bei der Herstellung in diesen eingeformt worden sein, wie dies bei dem hier beschriebenen Ausführungsbeispiel der Fall ist. In diesem Fall können die Befestigungselemente 6 als Längsträger ausgebildet sein. Es ist allerdings auch denkbar, die Befestigungselemente 6 als Versteifungsbleche oder auch als Bauteile mit anderen Funktionen auszubilden, beispielsweise als sogenannte "Crash-Boxen".

Der Stoßfänger 1 kann zusätzlich aus optischen Gründen mit einer Verkleidung aus Kunststoff versehen sein, die beispielsweise in Wagenfarbe lackiert ist. Eine solche Abdeckung würde dann lediglich optischen Zwecken dienen. Es ist beispielsweise üblich, dass Stoßfänger moderner Kraftfahrzeuge in Wagenfarbe lackiert sind. Hierzu ist eine entsprechend vorbereitete und glatte Außenhaut vorzusehen, die das hier beschriebene Bauteil unter Umständen nicht aufweist. Eine entsprechend vorbereitete oder lackierte Außenhülle, die auf dem Bauteil anzubringen ist, kann diesen Zweck erfüllen. Dann wäre es auch möglich, beispielsweise die Kammern 4a, b, c mit Abstand unter Bildung von Zwischenräumen zueinander anzuordnen.

Alle Kammern 4a, b, c, d des Mehrkammer-Hohlkörpers sind mit einem Polypropylen-Partikelschaum gefüllt, wobei beispielsweise die Kammer 4d, die den Träger 5 bildet, mit einem EPP-Schaum (Elastomer-Polypropylen) mit einer Raumdichte von 80-200 kg/m³ ausgefüllt ist.

Die Kammer 4a ist mit einem EPP-Partikelschaum mit einer Raumdichte von 50-80 kg/m³, die Kammer 4b mit einem EPP-Partikelschaum mit einer Raumdichte von 40-60 kg/m³ und die Kammer 4c mit einem EPP-Partikelschaum mit einer Raumdichte von 30-50 kg/m³ ausgefüllt. Hieraus ergibt sich eine von der Kammer 4c aus gesehen von oben nach unten (in Einbaulage) zunehmende Festigkeit der durch die Kammern 4a, b, c gebildeten Aufprallzonen des Stoßfängers 1.

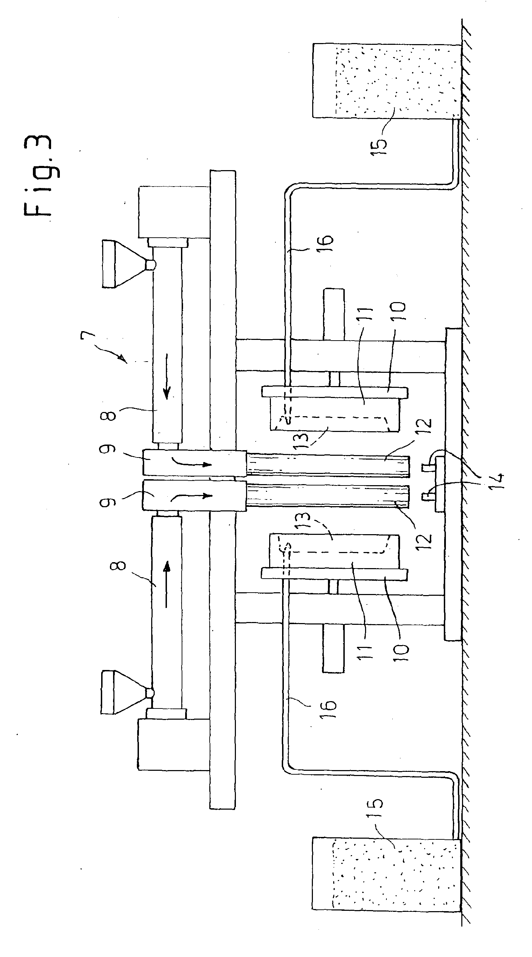

In Figur 3 ist schematisch das Verfahrensprinzip zur Herstellung des Stoßfängers 1 dargestellt. Mit 7 ist eine Extrusionsblasformanlage bezeichnet, die zwei Extruder 8 sowie zwei Extrusionsköpfe 9 und zwei an Formaufspannplatten 10 befestigte Formhälften 11 umfasst. Über die Extrusionsköpfe 9 werden zwei schlauchförmige Vorformlinge 12 aus plastifiziertem thermoplastischem Material extrudiert, und zwar parallel zwischen die geöffneten Formhälften 11. Nach dem Schließen der Formhälften 11 über eine Schließbewegung der Formaufspannplatten 10 werden die Vorformlinge 12 in bekannter Art und Weise innerhalb des von den Formhälften 11 gebildeten Formnests 13 mittels Blasluft aufgeweitet. Die Blasluft wird über die andeutungsweise dargestellten Blasdorne 14 von unten in die Vorformlinge eingebracht. Über diese Blasdorne 14 kann auch während des Aufweitvorgangs oder im unmittelbaren Anschluss hieran Schaumstoff in die aufgeweiteten Vorformlinge 12 eingebracht werden. Bei dem beschriebenen Ausführungsbeispiel sind wenigstens zwei Vorformlinge vorgesehen, die parallel zueinander zwischen die Formhälften 11 extrudiert werden, um einen segmentierten Querschnitt des fertigen Blasformteils zu erzielen. Selbstverständlich kann dies auch unter Zuhilfenahme von entsprechend ausgebildeten Extrusionsdüsen oder unter Zuhilfenahme von Schiebern in den Formhälften 11 erfolgen. Die Herstellung mehrkammeriger Hohlkörper durch Extrusionsblasen ist grundsätzlich bekannt.

Bei dem dargestellten Ausführungsbeispiel wird dem noch in der geschlossenen Form befindlichen Blasformkörper über die Vorratsbehälter 15 Partikelschaum zugeführt, und zwar über die Leitungen 16 und nicht gezeigte Injektionsnadeln.

Nach Fertigstellung und Befüllung des Bauteils mit Partikelschaum können die Befüllöffnungen erforderlichenfalls noch verschweißt werden.

Zur Erhöhung der Festigkeit der Füllung ist es möglich, die einzelnen Schaumpartikel innerhalb des Hohlkörpers mittels Heißdampf zu verschweißen. Alternativ hierzu kann das in der DE 199 30 903 beschriebene Verfahren zur Anwendung gelangen. Der Inhalt der DE 199 30 903 soll hier durch Bezugnahme vollständig mit offenbart sein.

### Bezugszeichenliste

- 1: Stoßfänger
- 2: Vorderseite
- 3: Rückseite
- 4a, b, c, d: Kammern
- 5: Träger
- 6: Befestigungselemente
- 7: Extrusionsblasformanlage
- 8: Extruder
- 9: Extrusionsköpfe
- 10: Formaufspannplatten
- 11: Formhälften
- 12: Vorformlinge
- 13: Formnest
- 14: Blasdorne
- 15: Vorratsbehälter
- 16: Leitungen

## Patentansprüche

1. Energieabsorbierendes Bauteil für Kraftfahrzeuge, insbesondere Stoßfänger, als blasgeformter Hohlkörper aus thermoplastischem Kunststoff, der eine Schaumstofffüllung allseitig umschließt, **dadurch gekennzeichnet , dass** der Hohlkörper mehrere jeweils abgeschlossene Kammern (4a, b, c, d) aufweist, die Schaumstofffüllungen mit unterschiedlichem Energieabsorptionsvermögen aufnehmen.

2. Energieabsorbierendes Bauteil nach Anspruch 1, **da - durch gekennzeichnet** , dass wenigstens eine Kammer (4d) einen sich über die gesamte Länge des Bauteils erstreckenden formsteifen Träger (5) bildet.

3. Energieabsorbierendes Bauteil nach Anspruch 2, **da- durch gekennzeichnet** , dass der den Träger (5) bildenden Kammer (4d) mehrere sich in Längsrichtung des Bauteils erstreckende Kammern (4a, b, c) vorgelagert sind, die verschiedene Aufprallzonen mit jeweils verschiedenem Energieabsorptionsvermögen bilden.

4. Energieabsorbierendes Bauteil nach Anspruch 3, **da - durch gekennzeichnet** , dass die dem Träger (5) als Aufprallzonen vorgelagerten Kammern (4a, b, c) in Einbaulage von oben nach unten eine zunehmende Festigkeit aufweisen.

5. Energieabsorbierendes Bauteil nach einem der Ansprüche 1 bis 4, **dadurch gekennzeichnet , dass** zumindest einige der Kammern (4a, b, c, d) jeweils mit Schaumstoffen unterschiedlicher Dichte befüllt sind.

6. Energieabsorbierendes Bauteil nach einem der Ansprüche 1 bis 5, **dadurch gekennzeichnet , dass** als Schaumstoffe Partikelschäume, vorzugsweise in Form von Minibeads, vorgesehen sind.

7. Energieabsorbierendes Bauteil nach einem der Ansprüche 1 bis 6, **dadurch gekennzeichnet , dass** unterschiedliche Bereiche des Hohlkörpers unterschiedliche Wandstärken aufweisen.

8. Energieabsorbierendes Bauteil nach Anspruch 7, **da- durch gekennzeichnet** , dass die dem Träger (5) vorgelagerten, als Aufprallzone vorgesehenen Kammern (4a, b, c) eine geringere Wandstärke aufweisen als die den Träger (5) bildende Kammer (4d).

9. Energieabsorbierendes Bauteil nach einem der Ansprüche 1 bis 8, **dadurch gekennzeichnet , dass** der Hohlkörper und dessen Füllungen aus einem gleichartigen Kunststoff bestehen.

10. Energieabsorbierendes Bauteil nach einem der Ansprüche 1 bis 9, **dadurch gekennzeichnet , dass** als Schaumstoffe Partikelschäume mit einer Dichte von 30-200 kg/m³ vorgesehen sind.

11. Energieabsorbierendes Bauteil nach einem der Ansprüche 1 bis 10, **dadurch gekennzeichnet , dass** als Schaumstoff ein Polypropylen-Partikelschaum (EPP) vorgesehen ist.
